(19) Europäisches Patentamt
European Patent Office
Office européen des brevets

(11) EP 2 530 446 B1

(12) **FASCICULE DE BREVET EUROPEEN**

(45) Date de publication et mention
de la délivrance du brevet:
**06.11.2019 Bulletin 2019/45**

(21) Numéro de dépôt: **12290178.8**

(22) Date de dépôt: **30.05.2012**

(51) Int Cl.:
*G01L 23/22* (2006.01)    *G01M 15/04* (2006.01)
*F02D 35/02* (2006.01)    *F02B 77/08* (2006.01)
*F02P 5/152* (2006.01)

(54) **Méthode d'estimation de l'intensité du cliquetis d'un moteur à combustion interne par inversion d'une equation d'onde**

Schätzmethode der Intensität des Klopfgeräusches eines Verbrennungsmotors durch Umkehrung einer Wellengleichung

Method for estimating the pinking intensity of an internal combustion engine by inverting a wave equation

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **01.06.2011 FR 1101685**

(43) Date de publication de la demande:
**05.12.2012 Bulletin 2012/49**

(73) Titulaire: **IFP Energies nouvelles
92500 Rueil-Malmaison (FR)**

(72) Inventeur: **Chauvin, Jonathan
75017 Paris (FR)**

(74) Mandataire: **IFP Energies nouvelles
Département Propriété Industrielle
Rond Point de l'échangeur de Solaize
BP3
69360 Solaize (FR)**

(56) Documents cités:
**EP-A1- 1 898 075    WO-A1-2009/031378
FR-A1- 2 898 411    FR-A1- 2 949 511
US-A- 5 099 681    US-A1- 2010 174 472
US-B1- 6 456 927**

Remarques:
Le dossier contient des informations techniques présentées postérieurement au dépôt de la demande et ne figurant pas dans le présent fascicule.

Printed by Jouve, 75001 PARIS (FR)

## Description

La présente invention concerne le domaine du contrôle de la combustion d'un moteur à combustion interne. L'invention concerne notamment une méthode pour estimer l'intensité de cliquetis d'un tel moteur au moyen d'un capteur placé dans le moteur.

Ce type de moteur comprend au moins un cylindre comportant une chambre de combustion délimitée par la paroi latérale interne du cylindre, par le haut du piston qui coulisse dans ce cylindre et par la culasse. Généralement, un mélange carburé est renfermé dans cette chambre de combustion et subit une étape de compression puis une étape de combustion sous l'effet d'un allumage commandé, par une bougie, ces étapes étant regroupées sous le vocable de « phase de combustion » dans la suite de la description.

Dans un moteur à explosion, la combustion du mélange air/essence commence normalement après l'étincelle. Le front de flamme se propage et son souffle repousse une partie du mélange contre les parois du cylindre et le sommet du piston. L'élévation de pression et de température devient tellement importante que le combustible coincé contre les parois atteint son point d'auto-allumage et s'auto enflamme à plusieurs endroits. Ce phénomène est appelé « cliquetis ». Ainsi le cliquetis est avant tout un phénomène de combustion anormale dans les moteurs à allumage commandé, perceptible extérieurement par un bruit métallique venant du moteur. Il résulte de l'apparition d'ondes de choc dans la chambre de combustion.

Les micro explosions qui en résultent produisent des vibrations dans le domaine acoustique (de l'ordre de 5 à 20 KHz). Elles sont très vives et peuvent rapidement créer des points chauds qui accentueront encore plus le problème. L'accumulation de micro explosions va arracher ou faire fondre une petite quantité de métal sur le sommet du piston et/ou sur les parois du cylindre et des segments. Au bout de quelques temps (selon l'intensité) cela conduira à la destruction du piston, des segments ou des parois du cylindre.

L'estimation de l'intensité de cliquetis permet un contrôle de la combustion limitant l'effet du cliquetis et n'endommageant pas le cylindre.

## État de la technique

On connaît des méthodes pour estimer le cliquetis d'un moteur à combustion interne. Elles sont basées sur l'enregistrement de signaux issus d'un capteur de pression cylindre. Une première méthode consiste à appliquer hors ligne, c'est à dire en traitement ultérieur, une technique de transformations de Fourier à ces signaux pour estimer le cliquetis. Une telle méthode est décrite dans les documents suivants :

- "Application of the Reallocated Smoothed Pseudo Wigner-Ville Distribution to Knock Détection", Olivier BOUBAL et Jacques OKSMAN, Traitement du Signal volume 15, 1998

- "Knock measurement for fuel évaluation in spark ignition engines", C. Hudson, X. Gao, R. Stone, Fuel volume 80 (2001)

Une seconde méthode consiste à appliquer aux signaux une technique de filtrage et de détections de maximum pour estimer le cliquetis hors ligne. Une telle méthode est décrite dans le document suivant :

- "Modeling of In-cylinder Pressure Oscillations under Knocking Conditions: Introduction to Pressure Envelope Curve", G. Brecq et O. Le Corre, SAE 2005

Enfin, on connaît une autre méthode, également basée sur l'enregistrement de signaux issus d'un capteur de pression cylindre. Cette fois, une technique d'ondelettes est appliquée aux signaux pour estimer le cliquetis hors ligne. Une telle méthode est décrite dans le document suivant :

- "Knocking detection using wavelet instantaneous correlation method", Z. Zhang et, E. Tomita, Journal of SAE Review volume 23 (2002)

Cependant, ces méthodes ne permettent pas une estimation de l'intensité du cliquetis en temps réel (le calcul doit se faire typiquement en moins de $50\mu s$ pour être embarqué sur un calculateur).

On connaît par la demande FR 2.949.511 une méthode pour estimer en temps réel l'intensité de cliquetis, à partir d'un signal vibratoire. Selon cette méthode, on détermine en temps réel les coefficients de la décomposition de Fourier de ce signal, on en déduit l'énergie contenue dans le signal en sommant les carrés de ces coefficients de la décomposition de Fourier. Enfin, on estime l'intensité de cliquetis en déterminant un paramètre corrélé à l'intensité de cliquetis égal à la racine carrée du maximum de l'énergie.

On connaît par la demande FR 2.898.411 une méthode d'estimation en temps réel de paramètres de combustion moteur à partir de signaux vibratoires, la méthode s'appuyant sur une estimation en temps réel de la décomposition harmonique du signal accélérométrique.

On connaît par la demande WO 2009/031378 une méthode de détermination du cliquetis, la méthode étant basée sur la comparaison de valeurs caractéristiques d'un signal vibratoire à une référence.

On connaît par la demande EP 1.898.075 une méthode d'estimation en temps-réel d'indicateurs de l'état de la combustion, la méthode permettant de détecter, au moyen d'un signal vibratoire, l'augmentation d'amplitude du contenu fréquentiel associé à la combustion isolé à l'aide d'un filtrage passe-bande.

L'objet de l'invention concerne une méthode alternative pour déterminer en temps réel l'intensité du cliquetis dans un moteur à combustion interne. La méthode est basée sur un traitement d'un signal vibratoire représentatif des vibrations du moteur. L'invention permet d'augmenter la représentativité en se basant sur une modélisation de la culasse par une équation aux ondes qui propage le signal vibratoire source, suivie d'une estimation des coefficients de Fourier de ce signal source.

Cette estimation est réalisée en temps réel de façon à contrôler au mieux la combustion et préserver le moteur.

## La méthode selon l'invention

De façon générale, l'invention concerne une méthode pour estimer en temps réel l'intensité de cliquetis d'un moteur à combustion interne comprenant une culasse, au moins un cylindre et au moins un capteur vibratoire, à partir duquel on acquiert en continu et en fonction de l'angle vilebrequin un signal vibratoire à la sortie de la culasse et représentatif des vibrations dans ledit cylindre. La méthode comporte les étapes suivantes :

- on construit un modèle d'équation d'onde de la culasse à partir d'un modèle physique décrivant la propagation d'une onde dans un milieu solide ;
- on détermine en temps réel des coefficients de la décomposition de Fourier du signal vibratoire engendré par le moteur et entrant dans la culasse, à partir dudit modèle d'équation d'onde à l'aide d'un estimateur et à partir du signal de vibratoire mesurée à la sortie de la culasse;
- on calcule une énergie contenue dans ledit signal en sommant les carrés desdits coefficients de la décomposition de Fourier;
- on déduit en temps réel un paramètre corrélé à l'intensité de cliquetis égal à la racine carrée du maximum de ladite énergie.

Selon l'invention, le signal vibratoire peut être un signal issu d'un capteur de pression cylindre ou un signal issu d'un capteur accélérométrique.

Ce signal vibratoire peut comporter plusieurs harmoniques et l'on peut alors estimer les coefficients de la décomposition de Fourier uniquement pour l'harmonique ou les harmoniques corrélées avec la combustion. Dans ce cas, on peut sélectionner les harmoniques corrélées avec la combustion en réalisant une analyse spectrale ou une analyse temps/fréquence, ou en choisissant la bande de fréquence 5000Hz - 20000Hz.

Selon un mode de réalisation, on détermine une plage angulaire incluant l'intégralité de la réponse vibratoire liée à la combustion, et l'on restreint le signal vibratoire à cette plage angulaire avant de réaliser ledit filtrage.

L'estimateur peut être un estimateur non linéaire de type adaptatif.

Selon l'invention, on peut modifier des paramètres moteurs en fonction du paramètre corrélé à l'intensité de cliquetis, pour contrôler la combustion du moteur.

D'autres caractéristiques et avantages de la méthode selon l'invention, apparaîtront à la lecture de la description ci-après d'exemples non limitatifs de réalisations, en se référant aux figures annexées et décrites ci-après.

## Présentation succincte des figures

- la figure 1 montre le schéma du principe du contrôle de la combustion selon l'invention.
- la figure 2 montre un schéma fonctionnel décomposant l'estimation de l'intensité du cliquetis via le paramètre $I_{CI}$.

## Description détaillée de la méthode

La méthode selon l'invention concerne une méthode de contrôle de la combustion d'un moteur à combustion interne prenant en compte les phénomènes de cliquetis. La méthode comporte l'estimation de l'intensité de cliquetis du moteur, à partir d'un traitement d'un signal issu d'un capteur, ce signal ayant un sens physique pour qualifier directement la combustion et l'éventuelle apparition de cliquetis. La méthode est indépendante de la nature de la combustion et de la technologie du capteur utilisé.

L'invention est décrite selon un mode de réalisation particulier, dans lequel on décrit la méthode appliquée à un cylindre unique, sans intégrer de particularismes associés au mode de combustion du moteur. La nature du moteur à combustion interne ainsi que la technologie du capteur de pression cylindre utilisé n'influence pas le principe de la méthode.

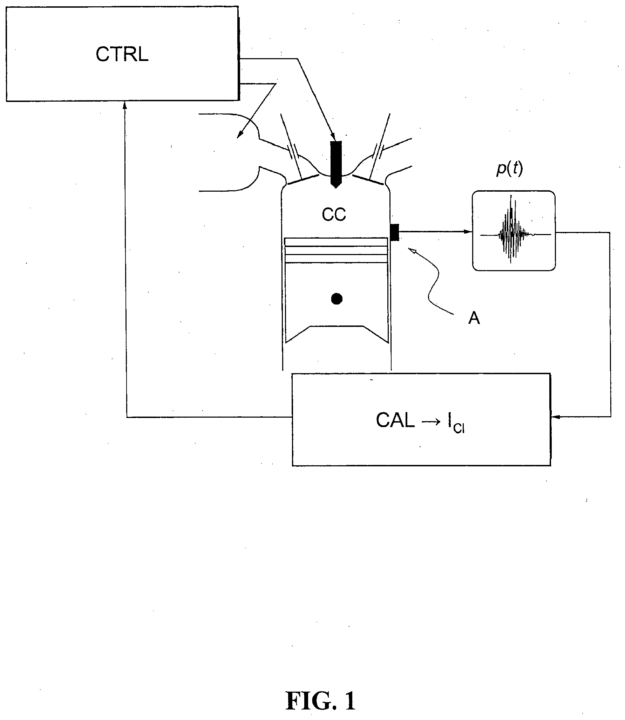

La figure 1 illustre le principe général de la méthode de contrôle selon l'invention. Dans un premier temps on acquiert un signal ($p(t)$) issu d'un capteur (A). Ce signal de pression correspond à la combustion dans la chambre de combustion (CC). On sait, que seuls certains harmoniques de ce signal contiennent de l'information qualifiant le cliquetis. L'idée est donc de calculer les différentes harmoniques de ce signal vibratoire en temps réel, puis de sélectionner celles qui correspondent à la combustion. Enfin, à partir de ces harmoniques portant une information sur la combustion, on calcule (CAL) l'intensité de cliquetis ($I_{Cl}$) qualifiant directement la combustion, toujours en temps réel, et permettant l'ajustement (CTRL) des paramètres du moteur pour réguler la combustion.

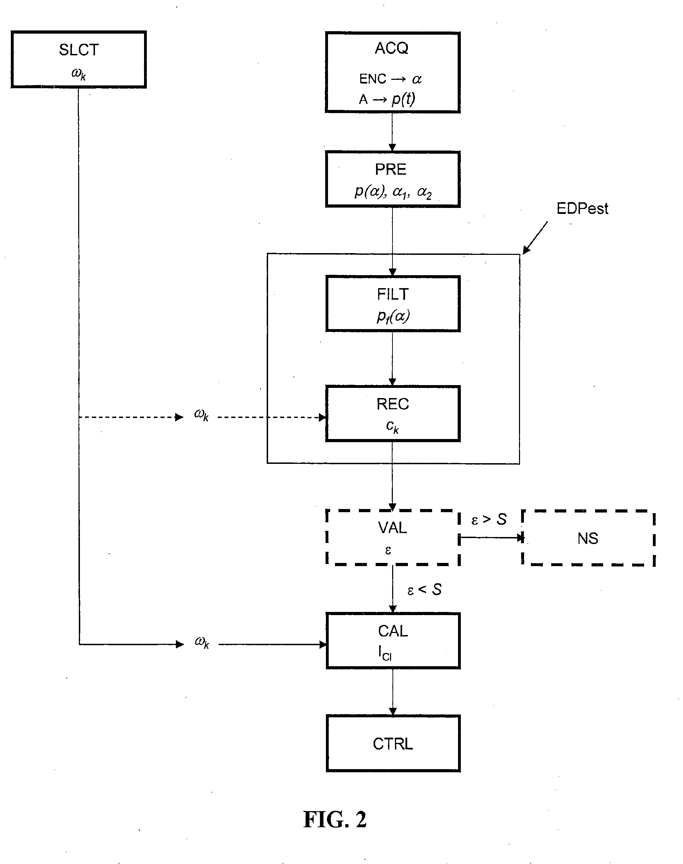

Comme l'illustre la figure 2, la méthode de contrôle moteur de la combustion peut se décomposer en cinq étapes principales :

Étape préliminaire :
Étape 1- Sélection des harmoniques qualifiant la combustion (SLCT)
Étapes réalisées en temps réel :

Étape 2- Acquisition d'un signal issu d'un capteur de pression cylindre (ACQ)
Étape 3- Détermination en temps réel des harmoniques du signal (EDPest)
Étape 4- Détermination en temps réel de l'intensité du cliquetis pour qualifier directement la combustion (CAL)
Étape 5- Contrôle moteur : Ajustement des paramètres du moteur pour réguler la combustion et éviter le cliquetis (CTRL)

**Étape 1 : Sélection des harmoniques qualifiant la combustion (SLCT)**

Toute grandeur oscillante périodique (ou grandeur alternativement croissante et décroissante), comme le signal issu d'un capteur accélérométrique, peut être considérée comme la somme de composantes sinusoïdales dont les fréquences sont multiples entiers de la fréquence fondamentale. Cette dernière, appelée aussi fréquence de base, est égale à l'inverse de la période de la grandeur considérée. Les fréquences multiples sont des composantes sinusoïdales dont la fréquence est un multiple entier de la fréquence fondamentale. Ces fréquences multiples sont appelées les harmoniques.

Chacune des harmoniques portent une ou plusieurs informations : bruit, combustion, claquement des injecteurs, retournement du piston au point mort haut, vibrations induites par le système de distribution, etc.

L'objectif est, dans un premier temps, de sélectionner, parmi ces composantes, celles qui contiennent de l'information qualifiant la combustion. Cette opération revient à extraire la partie utile du signal issu du capteur tout en s'affranchissant des phénomènes parasites.

Pour déterminer les harmoniques permettant de qualifier la combustion, deux méthodes peuvent être envisagées : l'analyse temps/fréquence ou l'analyse spectrale. Ces méthodes sont appliquées sur des signaux issus de capteurs dans le cadre d'expériences préalables à la mise en place des étapes permettant un contrôle de la combustion du moteur en temps réel.

L'analyse temps/fréquence du signal peut être interprétée comme une fenêtre glissante dans laquelle on effectue une transformée de Fourier rapide (FFT), bien connue des spécialistes, à chaque pas de temps. Cette forme de transformée de Fourier est aussi connue comme la transformée de Fourier à temps court, et sa représentation dans le plan temps fréquence est donnée par un spectrogramme. Un spectrogramme est un diagramme associant à chaque instant $t$ d'un signal, son spectre de fréquence. Dans son format le plus courant, l'axe horizontal représente le temps et l'axe vertical la fréquence. Chaque point à l'intérieur du graphique est doté d'une certaine intensité qui indique l'amplitude (souvent en décibels) d'une fréquence particulière à un temps donné. Dans le domaine de l'industrie automobile, il est courant de remplacer l'axe temporel par un axe angulaire, correspond à la valeur de l'angle vilebrequin. Sur un tel spectrogramme, la périodicité des combustions apparaît clairement sur l'axe angulaire. Ces événements correspondent à des phénomènes périodiques et synchrones avec les événements intervenant lors d'un cycle moteur dont une partie est liée à la combustion. Classiquement, dans le cadre d'analyse de signaux vibratoires issus du capteur de pression cylindre placé dans un moteur à combustion interne, on distingue clairement des zones d'étalement angulaire dans certaines bandes de fréquence entre 5kHz et 20kHz. En effet, entre un signal avec cliquetis et un signal sans cliquetis, on observe une différence très importante sur l'énergie dans les zones de fréquences de quelques kHz (le plus souvent entre 7 et 9, c'est pour cela que l'on étend le filtre entre 5 et 20). Cette fréquence dépend principalement de la géométrie du modèle. On obtient expérimentalement cette fréquence en réalisant quelques mesures sur le système de combustion.

Ainsi, selon la méthode, on peut soit fixer la bande de fréquence d'intérêt pour qualifier la combustion entre 5kHz et 20kHz, soit déterminer, en fonction du type de moteur par exemple, la bande de fréquence adéquate à l'aide d'une analyse spectrale.

Dans la suite de la description, on travaille dans la bande de fréquence 5kHz - 20kHz pour estimer l'intensité de cliquetis.

Les harmoniques (composantes fréquentielles) du signal sélectionnées sont notées: $\omega_k$ avec $k \in [1,n_h]$. L'entier $n_h$ est choisi de façon à ce que ces $n_h$ harmoniques appartiennent à la bande de fréquence 5kHz - 20kHz.

Les étapes 2 à 5 sont réalisées en temps réel.

## Étape 2 : Acquisition d'un signal issu d'un capteur de vibration (ACQ)

La méthode de contrôle de la combustion repose sur le traitement d'un signal vibratoire, ayant un sens physique pour qualifier directement la combustion et l'éventuelle apparition de cliquetis. Ce signal est délivré en continu par un capteur. Ce type d'acquisition est bien connu des spécialistes. Le signal acquis par le capteur (A) est noté $p(t)$. La variable $t$ représente le temps.

Le signal délivré par le capteur, $p(t)$, constitue une des deux entrées de la chaîne de traitement. Le second signal, $\alpha(t)$, est un signal fournissant la valeur de l'angle vilebrequin en fonction du temps. L'angle vilebrequin est noté $\alpha$. Ce signal est délivré par un codeur angulaire (ENC).

## Étape 3 : Détermination en temps réel des harmoniques du signal

L'objectif est, dans un premier temps, d'estimer en temps réel toutes les composantes harmoniques du signal vibratoire issu du capteur, ou tout au moins, les composantes harmoniques utiles sélectionnées à l'étape 1. Le fait de reconstruire ces composantes en temps réel signifie que l'on n'enregistre pas un signal en continue pour le traiter ultérieurement pour obtenir les composantes harmoniques, par une décomposition de Fourier par exemple. Au contraire, ces composantes sont estimées au fur et à mesure que le signal est mesuré. Pour ce faire on utilise un observateur d'EDP (Equation aux Dérivés Partielles) de Fourier. La méthode peut comporter les étapes suivantes :

- Extraction de la partie utile du signal : prétraitement du signal vibratoire (PRE)
- Estimation des harmoniques par un observateur EDP de Fourier (EDPest)

*Extraction de la partie utile du signal : prétraitement du signal vibratoire (PRE)*

Le traitement du signal issu du capteur constitue un élément primordial dans la chaîne de contrôle moteur puisqu'il délivre des variables exploitables pour le contrôle bouclé de la combustion. La première étape consiste en un traitement du signal vibratoire pour tirer un maximum d'information utile. Ce prétraitement (avant la reconstruction des harmoniques et des paramètres de combustion) pour extraire la partie utile du signal vibratoire peut comporter les étapes suivantes : échantillonnage de $p(t)$ dans le domaine angulaire, détermination d'une fenêtre angulaire incluant la combustion.

*Échantillonnage de p(t) dans le domaine angulaire*

Le signal $p(t)$ est échantillonné dans le domaine angulaire. Ce signal est alors noté $p(\alpha)$. Le domaine angulaire est, par opposition au domaine temporel, le domaine dans lequel toutes les données sont exprimées en fonction de l'angle vilebrequin. Cette étape permet de travailler dans un repère invariant comme pour toutes les machines tournantes. Le second intérêt à travailler dans le domaine angulaire, vient du fait que l'avance à l'allumage est pilotée de manière angulaire, par rapport au point mort haut (PMH), ce qui facilite le contrôle de l'avance pour la combustion. Mais il faut évidemment s'assurer du bon calage de l'encodeur angulaire qui définit l'origine du repère dans le domaine angulaire comme étant le point mort haut.

*Détermination d'une fenêtre angulaire [$\alpha_1$ ; $\alpha_2$] incluant la combustion*

Le signal $p(t)$ est mesuré en continu par une carte d'acquisition, puis transformé dans le domaine angulaire ($p(\alpha)$). Cependant, la suite du traitement est avantageusement effectuée uniquement sur une plage angulaire bornée par des angles $\alpha_1$ et $\alpha_2$. Ces deux paramètres font partie des éléments de calibration de l'observateur de cliquetis (observateur de Fourier selon l'invention). Les limites $\alpha_1$ et $\alpha_2$ dépendent de la plage angulaire d'occurrence de la combustion. Celle-ci peut être précoce (plusieurs degrés avant le PMH) ou, au contraire, extrêmement tardive (20 degrés après le PMH) selon le mode de combustion. Pour un moteur donné, les limites $\alpha_1$ et $\alpha_2$ doivent être choisies afin d'inclure l'intégralité de la réponse vibratoire de la combustion, et ceci sur la totalité de la plage de fonctionnement du moteur. Ces angles sont définis par rapport au point mort haut qui représente l'origine du repère. Donc, l'angle $\alpha_1$ est de signe négatif et $\alpha_2$ de signe positif.

En somme, la méthode propose de traiter le signal vibratoire sur une fenêtre de temps déterminée du signal issu du capteur, dont la position correspond à une position angulaire déterminée du vilebrequin du moteur. Le signal du capteur contenant, à l'intérieur de cette fenêtre de temps ou de la fenêtre angulaire [$\alpha_1$ ; $\alpha_2$] correspondante, des informations concernant le comportement vibratoire du moteur, permettant de déterminer des paramètres de combustion pour apprécier la qualité de la combustion.

*Estimation des harmoniques par un observateur de Fourier d'EDP (EDPest)*

*i. Construction d'un modèle d'équation d'onde à travers de la culasse*

Le signal que nous mesurons est un signal vibratoire représentatif des vibrations au sein du cylindre. Ces vibrations se propagent à travers la culasse du moteur. Nous mesurons la vibration à la sortie de la culasse et nous essayons de reconstruire le signal entrant dans la culasse. En passant à travers la culasse, ce signal est modifié à cause de la propagation des ondes dans du métal. Ainsi, nous appelons modèle d'équation d'onde de la culasse, un modèle permettant de transformer le signal vibratoire entrant dans la culasse en le signal vibratoire mesuré sur la culasse.

On recherche à estimer, à partir de ce modèle et de la mesure *y* (égale à $p_f(\alpha)$), le signal $\omega$, c'est-à-dire la reconstruction du signal vibratoire engendré par le moteur $p(\alpha)$ avec les fréquences utiles (contenant l'information relative à la combustion). Au cours de la méthode selon l'invention, on caractérise ce signal $\omega$ par des paramètres quasi invariants au cours du temps, ce qui permet de réaliser cette estimation en temps réel. En d'autres termes, on définit le signal $\omega$ à l'aide de paramètres qui, à un instant donné, sont des constantes. Pour ce faire, on exploite le fait que le signal $\omega$ est mécaniquement périodique. Ainsi, au lieu de réaliser une estimation du signal fortement variable $\omega$, on peut estimer les coefficients de la décomposition de Fourier de ce signal. On peut également utiliser tous paramètres permettant de décrire le signal $\omega$ en relation avec son caractère périodique.

La décomposition en coefficients de Fourier du signal $\omega$, développée en complexe pour la clarté de l'exposé, s'écrit ainsi :

$$\omega(\alpha) = \sum_{k=1}^{n_h} c_k e^{(i\omega_k\alpha)} \qquad (2)$$

Les $c_k$ représentent les coefficients de Fourier de la décomposition du signal $\omega$. On définit ainsi un signal traduisant le signal vibratoire, en fonction des paramètres $c_k$ invariants au cours du temps.

L'équation, connue des spécialistes, de la propagation d'une onde dans un milieu s'écrit :

$$\begin{cases} \partial_{\alpha\alpha} u = a\partial_{xx} u - b\partial_\alpha u \\ \partial_x u(L,\alpha) = -qu(L,\alpha) \end{cases}$$

avec

- *a* : le coefficient de vitesse de propagation de l'onde
- *b* : le coefficient de frottement
- *q* : le coefficient de réflexion
- *L* : la distance entre le capteur et la source
- *x* : la localisation spatiale
- *t* : le temps
- *u* : le signal mesurant l'onde. $u(x, t)$ est l'amplitude de l'onde au point *x* au temps *t*. Ainsi $u(0,t) = \omega(\alpha)$.

Les coefficients *a, b* et *q* dépendent du milieu. Selon l'invention ces paramètres sont choisis pour un milieu représentant la culasse, à savoir un milieu solide tel que le métal.

En n'utilisant qu'un nombre fini d'harmoniques, et à partir de l'équation de propagation d'une onde dans un métal, le modèle représentant en temps réel le modèle d'équation d'onde de la culasse s'écrit alors :

$$\begin{cases} \partial_{\alpha\alpha} u = a\partial_{xx} u - b\partial_\alpha u \\ \partial_x u(L,\alpha) = -qu(L,\alpha) \\ u(0,t) = \omega(\alpha) = \sum_{k=1}^{n_h} c_k e^{(i\omega_k \alpha)} \\ \dot{c}_k = 0, \quad pour \ tout \ k \in [1, n_h] \end{cases} \tag{3}$$

Selon l'invention, le but est d'estimer les coefficients ($c_k$) de Fourier de la décomposition du signal $\omega$.

Le système d'équations 3 représente le modèle d'équation d'onde de la culasse. Il permet de caractériser le signal $\omega$ par des paramètres quasi invariants au cours du temps (REC).

*ii. Détermination en temps réel des coefficients de la décomposition de Fourier*

Pour ce faire, on inverse la dynamique du modèle d'équation d'onde (système 3) à l'aide d'un estimateur, en couplant ce modèle avec un estimateur aux dérivés partiels non linéaire de type adaptatif.

On souhaite définir un estimateur, que l'on appelle « observateur de Fourier EDP», pour reconstruire l'excitation périodique du signal accéléromètrique à partir de sa mesure filtrée $p_f(\alpha)$. Cette étape de filtrage est notée FILT sur la figure 2. Pour cela, nous utilisons un filtre passe bande (entre 1 kHz et 100kHz) pour enlever les très basses fréquences et les très hautes fréquences.

A partir du modèle décrit par le système (3), on définit un estimateur non linéaire de type adaptatif comportant d'une part, un terme lié à la dynamique et d'autre part, un terme de correction :

$$\begin{cases} \partial_{\alpha\alpha}\hat{u} = a\partial_{xx}\hat{u} - b\partial_\alpha\hat{u} + \Phi_0(x)(y(\alpha) - \hat{u}(L,\alpha)) + (\Phi_1(x) + b\Phi_0(x))(\dot{y}(\alpha) - \dot{\hat{u}}(L,\alpha)) \\ \partial_x u(L,\alpha) = -qu(L,\alpha) - p_0(\dot{y}(\alpha) - \dot{\hat{u}}(L,\alpha)) + \phi_0(y(\alpha) - \hat{u}(L,\alpha)) \\ u(0,t) = \omega(\alpha) = \sum_{k=1}^{n_h} \hat{c}_k e^{(i\omega_k \alpha)} \\ \dot{\hat{c}}_k = -\phi_k(\alpha)'(y(\alpha) - \hat{u}(L,\alpha)), \quad pour\ tout\ k \in [1, n_h] \end{cases} \tag{4}$$

où :

- le signe désigne le complexe conjugué
- $\hat{u}$ : est la valeur estimée de u
- $\hat{c}_k$ : est la valeur estimée de ck
- $p_0$ : est un coefficient à calibrer (réel positif)

Un choix des paramètres $\Phi_0(x)$, $\Phi_1(x)$ et $\phi(\alpha)$ doivent assurer la convergence de l'estimateur (observateur). Pour cela, on définit tout d'abord la fonction suivante :

$$\phi(x,y) = \frac{\cosh\left(x\sqrt{\dfrac{by + y^2}{a}}\right) + \dfrac{yp_0}{\sqrt{\dfrac{by + y^2}{a}}}\sinh\left(x\sqrt{\dfrac{by + y^2}{a}}\right)}{\cosh\left(L\sqrt{\dfrac{by + y^2}{a}}\right) + \dfrac{yp_0}{\sqrt{\dfrac{by + y^2}{a}}}\sinh\left(L\sqrt{\dfrac{by + y^2}{a}}\right)}$$

et ensuite

$$\Phi_1(x) = \lambda \sum_{k=-n_h}^{n_h} \frac{1}{k^2+1} \phi(L-x, ik\omega_0) \phi(L, ik\omega_0)'$$

$$\Phi_0(x) = \lambda \sum_{k=-n_h}^{n_h} \frac{ik\omega_0}{k^2+1} \phi(L-x, ik\omega_0) \phi(L, ik\omega_0)'$$

$$\phi_k(\alpha) = \frac{\lambda}{k^2+1} e^{ik\omega_0\alpha} \phi(L, ik\omega_0)$$

$$\phi_0 = p_0 \Phi_1(L)$$

Le système d'équations (4) représente un estimateur non linéaire de type adaptatif permettant d'estimer les coefficients $c_k$ de la décomposition en coefficients de Fourier du signal $\omega$.

Cette méthode assure la reconstruction de l'excitation $\omega$ à travers les coefficients $c_k$. Le signal accélérométrique reconstruit $\hat{\omega}$ est donné par la relation suivante :

$$\hat{\omega}(\alpha) = \sum \hat{c}_k(\alpha) e^{iw_k\alpha}$$

Et l'on a :

$$\hat{y} = C\hat{x} = \hat{p}_f(\alpha)$$

Choix des harmoniques

On a considéré le cas où l'on utilisait les harmoniques choisies à l'étape 1 ($\omega_k$) pour reconstruire le signal : $k$ varie entre $-n_h$, et $n_h$, on utilise donc $n_h$ harmoniques, et ces harmoniques portent de l'information qualifiant la combustion.

Cependant, l'estimation $\hat{\omega}(\alpha)$ de l'excitation peut être réalisée à partir d'un nombre d'harmoniques plus important. En effet, plus l'on utilise de coefficients de Fourier, plus la reconstruction de l'excitation $\omega$ est précise. On ne sortirait donc pas du cadre de l'invention en choisissant un nombre d'harmoniques ($n_h$) différent du nombre d'harmoniques sélectionnées à l'étape 1. En revanche, il est évident que plus le nombre d'harmoniques choisi pour reconstruire l'excitation $\omega$ est grand, plus le temps de calcul est important. Il faut donc faire un compromis entre la rapidité de calcul et la précision.

L'objectif est donc de déterminer à la fois les $\omega_k$ pertinentes mais également le paramètre $n_h$ adapté, c'est-à-dire, le choix du nombre d'harmoniques nécessaires à la reconstruction du signal. Ce choix dépend des énergies respectives des différentes harmoniques. En général, les trois premières harmoniques sont les plus significatives pour qualifier la combustion et elles suffisent pour reconstruire l'excitation. On prendra dans la majeure partie des cas $n_h = 1$. Le signal ainsi reconstruit est noté $\hat{p}(\alpha)$.

Exemple de calibration de l'observateur.

Le tableau 1, où $N_{cyl}$ représente le nombre de cylindres du moteur, présente des exemples de valeurs des paramètres nécessaires à la calibration de l'observateur de Fourier.

Tableau 1 : Récapitulatif des paramètres de réglages adaptés au moteur d'essai.

| Paramètre | Unité | Description | Valeur |
|---|---|---|---|
| $\alpha_1$ | degré | borne inférieure de la fenêtre angulaire | 0 |
| $\alpha_2$ | degré | borne supérieure de la fenêtre angulaire | 80 |
| $F_1$ | hertz | fréquence de coupure basse du filtre passe bande | 5000 |

(suite)

| Paramètre | Unité | Description | Valeur |
|---|---|---|---|
| $F_2$ | hertz | fréquence de coupure haute du filtre passe bande | 20000 |
| $n_h$ | - | nombre de coefficient de Fourier nécessaires à la reconstruction du signal | 1 |
| $\lambda$ | - | Gain de l'observateur | .1 |
| $p_0$ | - | Gain de l'observateur | $\dfrac{1}{2}$ |
| $w_1$ | hertz | pulsation du premier harmonique | 7500 |

*Vérification de la qualité de l'estimation (VAL)*

Afin d'éviter l'envoi de paramètres erronés au contrôle moteur, une étape optionnelle permet de valider la pertinence de la reconstruction du signal vibratoire. Un seuil sur le carré du signal d'erreur (différence entre la mesure et l'estimée) assure cette fonction.

$$\varepsilon = (y - \hat{y})^2$$

Si ce seuil $\varepsilon$ est trop important, supérieur à un seuil S fixé, l'envoi de paramètres au contrôle moteur n'est pas réalisé (NS). Sinon, on réalise l'étape 4 (CAL).

### Étape 4 : Détermination de paramètres pour qualifier directement l'intensité de cliquetis (CAL)

Dès lors qu'est validée l'estimation des composantes fréquentielles du signal vibratoire, l'opération de contrôle moteur peut être menée. Le contrôle bouclé en régime transitoire de la combustion requière l'estimation en temps réel de paramètre corrélé à l'intensité de cliquetis, afin d'atteindre un contrôle cycle à cycle.

Le principe de la méthode repose sur l'estimation en temps réel d'un paramètre, noté $I_{CI}$, permettant de caractériser l'intensité du cliquetis dans le cylindre d'un moteur.

De façon préférentielle, le calcul de ce paramètre repose sur l'analyse de l'énergie contenue dans les harmoniques (composantes spectrales) sélectionnées. L'énergie $E(\alpha)$ est donnée par la somme des *nh* premiers coefficients de la décomposition de Fourier délivrés par l'observateur périodique et mis au carré :

$$E(\alpha) = \sum \left(c_k(\alpha)\right)^2$$

En se basant sur cette énergie, on donne un sens physique au paramètre $I_{CI}$, puisque l'énergie $E(\alpha)$ augmente avec l'énergie libérée pendant la combustion.

On peut par exemple définir le paramètre suivant, dont la valeur est représentative de l'intensité du cliquetis :

$$I_{CI} = \left(\max_{\alpha \in [\alpha_1, \alpha_2]}\left(E(\alpha)\right)\right)^{1/2}$$

### Étape 5 : Contrôle moteur de la combustion (CTRL)

La mise en oeuvre d'une stratégie de commande en boucle fermée est possible en se basant sur ce paramètre $I_{CI}$. Ce paramètre d'intensité est utilisé pour compenser des variations des caractéristiques du carburant ou des déséquilibres cylindre à cylindre. A titre d'exemple, voici une stratégie de contrôle à partir du paramètre $I_{CI}$.

*Réglage du phasage de l'allumage.* Le phasage de l'allumage est une composante primordiale car elle entre en ligne de compte dans l'optimisation du rendement de la combustion et des émissions polluantes. Dans ce cas précis, le $I_{CI}$ est un candidat idéal pour envisager un bouclage de l'avance à l'allumage afin de ne pas dépasser une intensité impliquant la destruction ou la détérioration moteur.

En effet, plus on retarde l'allumage, plus la probabilité de cliqueter devient importante. De ce fait, on contrôle l'avance à l'allumage avec un contrôleur proportionnel intégral, afin de contrôler le cliquetis vers un niveau de référence qui permet une bonne production de couple et de ne pas endommager le moteur. Cette valeur de référence peut être déterminée expérimentalement car elle dépend du moteur et de la géométrie du cylindre.

### Variantes

Dans le cadre de l'invention, on peut utiliser tout capteur capable de fournir un signal corrélé avec les vibrations du cylindre.

On peut par exemple utiliser le signal issu d'un capteur accélérométrique. En effet, un tel signal correspond à une grandeur oscillante périodique et peut donc être considéré comme la somme de composantes sinusoïdales dont les fréquences sont multiples entiers de la fréquence fondamentale. Ce signal d'accélération $a(t)$ correspond à la vibration du bloc moteur qui est fortement corrélé à la combustion.

### Avantage de l'invention.

La méthode proposée présente l'avantage, contrairement aux méthodes antérieures, d'accéder en temps réel à une estimation de l'intensité du cliquetis. Ainsi, à l'issue d'un cycle moteur, le paramètre de cliquetis ($I_{CI}$) est disponible, et permet de réaliser un diagnostic du cycle écoulé. En fonction de ce diagnostic, si l'intensité est jugée trop forte, les paramètres d'allumage sont modifiés afin de garantir la stabilité de la combustion suivante et sa conformité par rapport au point de référence. On rappelle que l'analyse fréquentielle d'un signal peut se révéler coûteuse en terme de temps de calcul et inadéquate pour le traitement en temps réel. Ici, la méthode proposée est à la fois précise et rapide.

De plus, la méthode selon l'invention ne dépend pas de la nature de la combustion ou de la technologie du capteur utilisé. Les paramètres de réglages assurent une bonne adaptabilité de la méthode à diverses configurations moteur/capteur.

L'utilisation d'un modèle d'équation d'onde se propageant à travers la culasse permet à ce procédé d'être plus proche de la réalité physique que les méthodes antérieures.

### Revendications

1. Méthode pour estimer en temps réel l'intensité de cliquetis d'un moteur à combustion interne comprenant une culasse, au moins un cylindre et au moins un capteur vibratoire, à partir duquel on acquiert (ACQ) en continu et en fonction de l'angle vilebrequin un signal vibratoire (y) à la sortie de la culasse et représentatif des vibrations dans ledit cylindre, **caractérisée en ce que** l'on réalise les étapes suivantes :

   - on construit un modèle d'équation d'onde de la culasse à partir d'un modèle physique décrivant la propagation d'une onde dans un milieu solide ;
   - on détermine en temps réel des coefficients de la décomposition de Fourier (EDPest) du signal vibratoire (p(t)) engendré par le moteur et entrant dans la culasse, à partir dudit modèle d'équation d'onde à l'aide d'un estimateur et à partir du signal de vibratoire (y) mesurée à la sortie de la culasse;
   - on calcule une énergie contenue ($E(\alpha)$) dans ledit signal en sommant les carrés desdits coefficients de la décomposition de Fourier;
   - on déduit en temps réel un paramètre corrélé à l'intensité de cliquetis (CAL) égal à la racine carrée du maximum de ladite énergie.

2. Méthode selon la revendication 1, dans laquelle ledit signal vibratoire est un signal issu d'un capteur accélérométrique.

3. Méthode selon l'une des revendications précédentes, dans laquelle ledit signal vibratoire comporte plusieurs harmoniques et l'on estime lesdits coefficients de la décomposition de Fourier uniquement pour l'harmonique ou les harmoniques corrélées avec la combustion.

4. Méthode selon la revendication 3, dans laquelle on sélectionne lesdites harmoniques corrélées avec la combustion en réalisant une analyse spectrale ou une analyse temps/fréquence, ou en choisissant la bande de fréquence 5000Hz - 20000Hz.

5. Méthode selon l'une des revendications précédentes, dans laquelle on détermine une plage angulaire incluant l'intégralité de la réponse vibratoire liée à la combustion, et l'on restreint ledit signal vibratoire à cette plage angulaire avant de réaliser ledit filtrage.

**6.** Méthode selon l'une des revendications précédentes, dans laquelle ledit estimateur est un estimateur non linéaire de type adaptatif.

**7.** Méthode selon l'une des revendications précédentes, dans laquelle on modifie (CTRL) des paramètres moteurs en fonction dudit paramètre corrélé à l'intensité de cliquetis, pour contrôler la combustion dudit moteur.

**Patentansprüche**

**1.** Verfahren zur Schätzung in Echtzeit der Klopfintensität eines Verbrennungsmotors, umfassend einen Zylinderkopf, mindestens einen Zylinder und mindestens einen Vibrationssensor, von dem kontinuierlich und als Funktion des Kurbelwellenwinkels ein Vibrationssignal (y) am Ausgang des Zylinderkopfs erfasst wird (ACQ), das für Vibrationen in dem Zylinder repräsentativ ist, **dadurch gekennzeichnet, dass** die folgenden Schritte durchgeführt werden:

- ein Wellengleichungsmodell des Zylinderkopfs wird aus einem physikalischen Modell erstellt, das die Ausbreitung einer Welle in einem festen Medium beschreibt;
- in Echtzeit werden Koeffizienten der Fourier-Zerlegung (EDPest) des Vibrationssignals (p(t)), das von dem Motor erzeugt wird und in den Zylinderkopf eintritt, aus dem Wellengleichungsmodell mit Hilfe eines Schätzers und aus dem Vibrationssignal (y) bestimmt, das am Ausgang des Zylinderkopfs gemessen wird;
- eine Energie (E($\alpha$)) wird berechnet, die in dem Signal enthalten ist, indem die Quadrate der Koeffizienten der Fourier-Zerlegung summiert werden;
- in Echtzeit wird ein Parameter abgeleitet, der mit der Klopfintensität (CAL) korreliert ist, gleich der Quadratwurzel des Maximums der Energie.

**2.** Verfahren nach Anspruch 1, wobei das Vibrationssignal ein Signal ist, das von einem Akzelerometersensor ausgegeben wird.

**3.** Verfahren nach einem der vorhergehenden Ansprüche, wobei das Vibrationssignal mehrere Harmonische umfasst, und die Koeffizienten der Fourier-Zerlegung nur für die Harmonische oder die Harmonischen geschätzt werden, die mit der Verbrennung korreliert sind.

**4.** Verfahren nach Anspruch 3, wobei die Harmonischen, die mit der Verbrennung korreliert sind, ausgewählt werden, indem eine Spektralanalyse oder eine Zeit-Frequenz-Analyse durchgeführt wird, oder indem das Frequenzband von 5000 Hz bis 20000 Hz ausgewählt wird.

**5.** Verfahren nach einem der vorhergehenden Ansprüche, wobei ein Winkelbereich bestimmt wird, der die Integralität der Vibrationsantwort umfasst, die mit der Verbrennung verbunden ist, und das Vibrationssignal auf diesen Winkelbereich begrenzt wird, bevor das Filtern durchgeführt wird.

**6.** Verfahren nach einem der vorhergehenden Ansprüche, wobei der Schätzer ein nicht linearer Schätzer des adaptiven Typs ist.

**7.** Verfahren nach einem der vorhergehenden Ansprüche, wobei Motorparameter als Funktion des Parameters modifiziert werden (CTRL), der mit der Klopfintensität korreliert ist, um die Verbrennung des Motors zu steuern.

**Claims**

**1.** Method for estimating, in real time, the intensity of knocking of an internal combustion engine comprising a cylinder head, at least one cylinder and at least one vibratory sensor, from which a vibratory signal (y) at the exit from the cylinder head and indicative of the vibrations in the said cylinder is acquired (ACQ) continuously and as a function of crank angle, **characterized in that** the following steps are performed:

- a cylinder head wave equation model is constructed on the basis of a physical model describing the propagation of a wave through a solid medium;
- coefficients of the Fourier decomposition (EDPest) of the vibratory signal (p(t)) generated by the engine and entering the cylinder head are determined in real time on the basis of the said equation real time on the basis of the said wave equation model using an estimator and on the basis of the vibratory signal (y) measured at the exit from the cylinder head;

- an energy ($E(\alpha)$) contained in the said signal is calculated by summing the squares of the said coefficients of the Fourier decomposition;

- a parameter correlating with the intensity of the knocking (CAL) and equal to the square root of the maximum of the said energy is deduced in real time.

2. Method according to Claim 1, in which the said vibratory signal is a signal coming from an accelerometer sensor.

3. Method according to one of the preceding claims, in which the said vibratory signal contains several harmonics and the said coefficients of the Fourier decomposition are estimated only for the harmonic or harmonics correlating with combustion.

4. Method according to Claim 3, in which the said harmonics correlating with combustion are selected by performing spectral analysis or time/frequency analysis or by selecting the 5000 Hz-20 000 Hz frequency band.

5. Method according to one of the preceding claims, in which an angular range including all of the vibratory response associated with combustion is determined, and the said vibratory signal is restricted to this angular range before the said filtering is performed.

6. Method according to one of the preceding claims, in which the said estimator is a nonlinear estimator of adaptive type.

7. Method according to one of the preceding claims, in which engine parameters are modified (CTRL) as a function of the said parameter correlating with the intensity of the knocking, in order to control the combustion in the said engine.

**FIG. 1**

**FIG. 2**

## RÉFÉRENCES CITÉES DANS LA DESCRIPTION

**Documents brevets cités dans la description**

- FR 2949511
- FR 2898411
- WO 2009031378 A
- EP 1898075 A

**Littérature non-brevet citée dans la description**

- **OLIVIER BOUBAL ; JACQUES OKSMAN.** Application of the Reallocated Smoothed Pseudo Wigner-Ville Distribution to Knock Détection. *Traitement du Signal,* 1998, vol. 15
- **C. HUDSON ; X. GAO ; R. STONE ; FUEL.** *Knock measurement for fuel évaluation in spark ignition engines,* 2001, vol. 80
- **G. BRECQ ; O. LE CORRE.** Modeling of In-cylinder Pressure Oscillations under Knocking Conditions: Introduction to Pressure Envelope Curve. *SAE,* 2005
- Knocking detection using wavelet instantaneous correlation method'', Z. Zhang et, E. Tomita. *Journal of SAE Review,* 2002, vol. 23